**Europäisches Patentamt**

**European Patent Office**

**Office européen des brevets**

(19)

(11) **EP 1 427 111 A2**

(12) **EUROPEAN PATENT APPLICATION**

(43) Date of publication:
**09.06.2004 Bulletin 2004/24**

(51) Int Cl.⁷: **H04B 1/10**, H04B 1/16

(21) Application number: **03027731.3**

(22) Date of filing: **02.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **04.12.2002 JP 2002352585**

(71) Applicant: **Pioneer Corporation**
**Meguro-ku, Tokyo (JP)**

(72) Inventor: **Suganuma, Hisashi, Kawagoe Koujou**
**Kawagoe-shi Saitama-ken 350-8555 (JP)**

(74) Representative:
**Bohnenberger, Johannes, Dr. et al**
**Meissner, Bolte & Partner**
**Postfach 86 06 24**
**81633 München (DE)**

(54) **Noise eliminator for radio receiver**

(57)     A noise eliminator 3 is provided for eliminating noise contained in a signal while avoiding missing signal components. Upon detecting noise contained in an input signal, a holding unit 4 puts the signal into a hold state for output. A synthetic unit 5 synthesizes the signal component of the output signal in the hold state with an interpolation amount Scmp supplied from an interpolation control unit 6, thereby generating an output signal. A predictor 7 performs a predictive operation on the output signal of the synthetic unit to determine a predictive val-
ue approximate to the input signal. The interpolation control unit determines the amount of change of the predictive value as the interpolation amount. If the predictive value differs greatly from a hold signal component output in the hold state from the holding unit, the interpolation control unit stops or inhibits the synthetic unit from performing the synthesis with the interpolation amount. If, further, the predictive value is appropriate, the interpolation control unit makes the synthetic unit perform the synthesis with the interpolation value.

## FIG.2

**Description**

BACKGROUND OF THE INVENTION

The present invention relates to a noise eliminator for eliminating noise from a signal processed by electronic equipment such as a receiver.

Conventionally, it has been a significant challenge to develop electronic devices which have excellent noise immunity against noises such as external noise.

For example, receivers such as a radio receiver for receiving radio broadcasts, and communication equipment including radio communication devices and cellular phones are sometimes used in an environment susceptible to external noise and the like. It has thus been a significant challenge to provide excellent noise immunity.

Description will now be given of a more concrete example. An in-car radio receiver mounted on a vehicle is subject to external noise such as ignition noise occurring from the vehicle. Then, studies have been made on a noise elimination method for eliminating external noise contained in the detection signal for the sake of high quality sound reproduction.

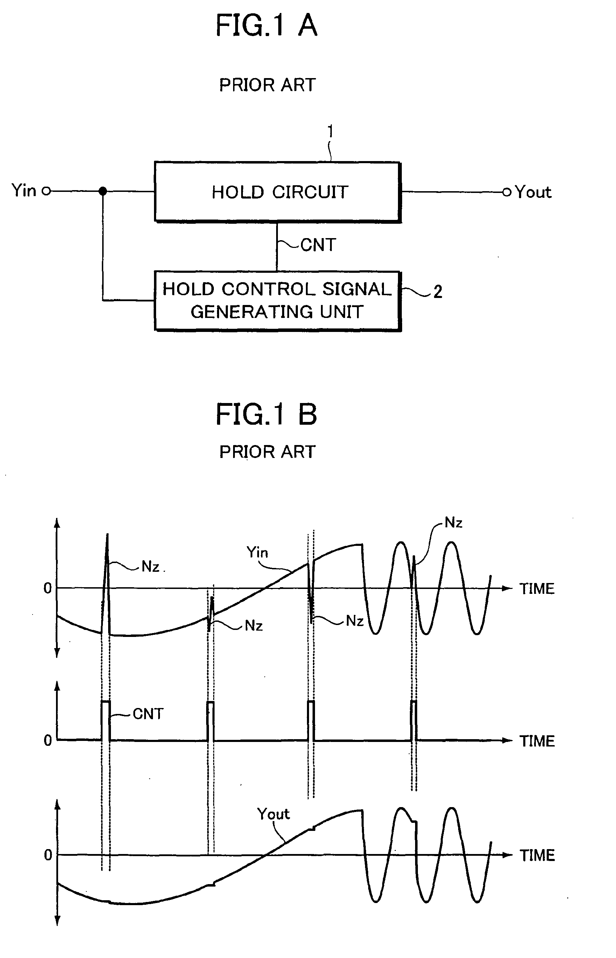

Fig. 1A shows the configuration of a conventional noise eliminator for exercising this noise elimination method.

This noise eliminator comprises a hold circuit 1 for inputting an FM detection signal Yin which results from FM detection, and a hold control signal generating unit 2.

The hold control signal generating unit 2 comprises a high-pass filter having a predetermined cut-off frequency, and a wave-shaping circuit. When the detection signal Yin containing noise Nz as illustrated in Fig. 1B is supplied, the hold control signal generating unit 2 puts the FM detection signal Yin through the foregoing high-pass filter to extract individual pieces of noise Nz. In addition, the hold control signal generating unit 2 shapes the waveforms of the extracted pieces of noise Nz through the foregoing wave-shaping circuit, thereby generating a hold control signal CNT of rectangular waveform which indicates the periods of occurrence of the respective pieces of noise Nz.

That is, the hold control signal CNT is generated as a so-called binary signal which is inverted from logical "L" to logical "H" at the starting point of occurrence of noise Nz and inverted again from logical "H" to logical "L" at the end point of the noise Nz.

The hold circuit 1 is made of a so-called S/H circuit (sample hold circuit) which is controlled by the hold control signal CNT. When the hold control signal CNT is logical "L," i.e., when there occurs no noise Nz, the hold circuit 1 passes the FM detecting signal Yin as-is for output. On the other hand, when noise Nz occurs, the hold circuit 1 holds the signal component of the FM detection signal Yin at the time of a so-called rising edge where the hold control signal CNT is inverted from logical "L" to logical "H." The level of this held signal component is maintained and output during the period when the hold control signal CNT keeps being logical "H" (i. e., during the period when the noise Nz occurs).

According to this conventional noise eliminator, as shown by the waveform at the bottom of Fig. 1B, the level of the FM detection signal Yout output from the hold circuit 1 is fixed to that of the held signal component mentioned above in the period when the noise Nz occurs, i.e., while the hold control signal CNT keeps being logical "H. " Thus, even if noise of relatively high energy such as ignition noise is superimposed on the FM detection signal Yout, it is possible to eliminate the noise Nz forcefully.

By the way, the conventional noise eliminator can effectively eliminate noise which is superimposed on the foregoing FM detection signal Yin. There has been the problem, however, that it is sometimes difficult to make distinction between signal components and noise, and signal components actually not to be eliminated might be eliminated.

This has produced problems including that it is difficult to achieve high quality sound reproduction and the like based on the FM detection signal Yout output from the foregoing hold circuit 1 when necessary signal components actually not to be eliminated are eliminated.

SUMMARY OF THE INVENTION

The present invention has been achieved in view of the foregoing conventional problems. It is thus an object of the present invention to provide a noise eliminator which exercises appropriate noise elimination.

A noise eliminator according to a first aspect of the present invention is one for eliminating noise contained in an input signal, comprising: a holding unit for detecting a period of occurrence of noise contained in the input signal, passing the input signal for output during a period when no noise occurs, and putting the input signal into a hold state for output during the period of occurrence of noise; a synthetic unit for synthesizing a hold signal component of the signal output from the holding unit with an interpolation amount, the hold signal component being output in the hold state; a predictor for performing a predictive operation on output signals of the synthetic unit to calculate predictive values approximate to the input signal; and an interpolation control unit for determining the amount of change of the predictive values as the interpolation amount, and stopping the synthetic unit from performing the synthesis of the interpolation amount when the predictive values are inappropriate with respect to the hold signal component output in the hold state, and making the synthetic unit perform the synthesis of the interpolation amount when the predictive values are appropriate.

A noise elimination method according to a second aspect of the present invention is one for eliminating noise contained in an input signal, comprising: a holding step of detecting a period of occurrence of noise contained in the input signal, passing the input signal for output during a period when no noise occurs, and putting the input signal into a hold state for output during the period of occurrence of noise; a synthetic step of synthesizing a hold signal component of the signal output in the holding step with an interpolation amount, the hold signal being output in the hold state; a predictive step of performing a predictive operation on output signals generated in the synthetic step to calculate predictive values approximate to the input signal; and an interpolation control step of determining the amount of change of the predictive values as the interpolation amount, and stopping the synthesis of the interpolation amount in the synthetic step when the predictive values are inappropriate with respect to the hold signal component output in the hold state, and enabling the synthesis of the interpolation amount in the synthetic step when the predictive values are appropriate.

BRIEF DESCRIPTION OF THE DRAWINGS

These and other objects and advantages of the present invention will become clear from the following description with reference to the accompanying drawings, wherein:

Figs. 1A and 1B are diagrams for explaining the configuration and operation of a conventional noise eliminator;
Fig. 2 is a block diagram showing the configuration of a noise eliminator according to an embodiment of the present invention;
Fig. 3 is a diagram showing the configuration of a noise eliminator according to an example;
Figs. 4A and 4B are diagrams showing the configuration and characteristic of a prediction filter provided in the noise eliminator of the example;
Fig. 5 is a diagram showing the configuration of an error detecting unit provided in the noise eliminator of the example;
Figs. 6A to 6D are charts for explaining the operation of the noise eliminator of the example; and
Figs. 7A to 7E are charts for further explaining the operation of the noise eliminator of the example.

DETAILED DESCRIPTION OF THE PREFERRED EMBODIMENTS

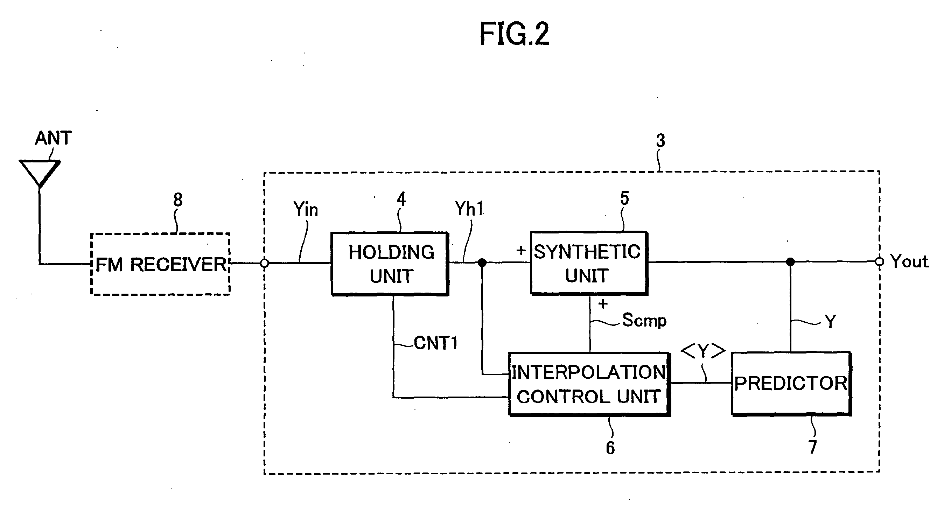

Hereinafter, a preferred embodiment of the present invention will be described with reference to Fig. 2.
Fig. 2 is a block diagram showing the configuration of a noise eliminator according to the present embodiment.

For convenience of explanation, the description will be given of the case of eliminating noise which is contained in an FM detection signal Yin output from an FM receiver unit 8 for receiving and detecting FM broadcasts.
In Fig. 2, this noise eliminator 3 comprises holding means (hereinafter, referred to as "holding unit") 4, synthetic means (hereinafter, referred to as "synthetic unit") 5, interpolation control means (hereinafter, referred to as "interpolation control unit") 6, and predictive means (hereinafter, referred to as "predictor") 7.
The holding unit 4 inputs the FM detection signal Yin (hereinafter, referred to as "input signal") output from the FM receiver unit 8, and detects whether or not the input signal Yin contains noise. The holding unit 4 passes the input signal Yin as-is for output in periods where no noise is contained, and holds the input signal Yin for in periods where noise occurs.
More specifically, the FM receiver unit 8 receives incoming waves from broadcast stations via an antenna ANT, performs tuning and frequency conversion to generate intermediate frequency signals (IF signals), and then detects the intermediate frequency signals to generate an FM detection signal. The holding unit 4 inputs the FM detection signal as its input signal Yin.
Then, while no noise is detected, the holding unit 4 passes the input signal Yin as-is for output. On the other hand, when noise is detected, the holding unit 4 holds the signal component of the input signal Yin which is input immediately before the point of detection of the noise, and maintains the level of this held signal component (hereinafter, referred to as "hold signal components") for output throughout the period of occurrence of noise until the noise disappears.
Moreover, the holding unit 4 also supplies a hold control signal CNT1 to the interpolation control unit 6. The hold control signal CNT1 indicates the period of occurrence of noise mentioned above (hereinafter, referred to as "hold period").
For convenience of explanation, the signals output from the holding unit 4 shall be referred to as hold signal Yh1. That is, as described above, the holding unit 4 either passes the input signal Yin as-is for output, or outputs the hold signal component during a hold period. These signals to be output from the holding unit 4 shall be referred to collectively as hold signal Yh1.
In the foregoing hold period, the synthetic unit 5 synthesizes the hold signal Yh1 with an interpolation amount Scmp which is supplied from the interpolation control unit 6. More specifically, assuming that the level of the hold signal component in a hold period is Yh1_HOLD, the synthetic unit 5 synthesizes this with an interpolation amount Scmp so that the level of the hold signal Yh1 in the hold period is (Yh1_HOLD + Scmp).
Through such synthetic processing, the signal component missing upon the hold processing in the holding unit 4 is interpolated (synthesized) with the interpolation value Scmp. The resultant is output as an FM detection signal (hereinafter, referred to as "output signal") Yout having necessary signal components.

The predictor 7 inputs the output signal Yout as a sample signal Y. Based on the sample signal Y, the predictor 7 then performs predictive operations to determine predictive values <Y>.

More specifically, the predictor 7 inputs the sample signal Y in synchronization with predetermined sampling intervals $\Delta T$, thereby inputting the sample signal Y as a series of sample values in synchronization with the sampling intervals $\Delta T$. Then, each time it inputs the sample signal Y in synchronization with a sampling interval $\Delta T$, the predictor 7 determines a predictive value <Y> approximate to the input signal Yin by using a plurality n of sample values in series already input within a predetermined period T before the point of input.

Here, the predictor 7 is provided with a predictive operation method in advance so that it can extract the characteristic of the signal components which might drop out during the hold processing in the holding unit 4, and reproduce predictive values <Y> approximate to the signal components with high fidelity.

To name a concrete example of the subject of the predictive operation, it is generally known that the input signal (FM detection signal) Yin supplied from the FM receiver unit 8 to the holding unit 4 includes not only signal components for so-called sound reproduction but also control signals such as a 19-kHz pilot signal and a 38-kHz sub carrier. If the holding unit 4 detects the pilot signal, sub carrier, and the like as noise, and performs the hold processing, then the hold signal Yh1 output from the holding unit 4 would lack the pilot signal, sub carrier, and so on. As a result, unless the synthetic unit 5 applies such processing as interpolation to the hold signal Yh1 which lacks the aforementioned pilot signal, sub carrier, and so on, the output signal Yout would also lack the pilot signal, sub carrier, and the like. Then, it would be difficult to reproduce high quality sound etc. when such processing as sound reproduction is performed based on the output signal Yout.

To realize a noise eliminator 3 which can avoid the pilot signal, sub carrier, and the like missing, the predictive operation method of the predictor 7 is previously established as described below so that predictive values <Y> approximate to the pilot signal, sub carrier, and the like are reproduced with high fidelity.

Initially, to determine the predictive values <Y> of the 19-kHz pilot signal and the 38-kHz sub carrier, a frequency ($k \times fc$) is determined which is the least common multiple of 19 kHz and 38 kHz, or a frequency fc, multiplied by an integer k (k is a natural number). A period corresponding to the reciprocal of the frequency ($k \times fc$), i.e., $1 / (k \times fc)$ is determined as the period $\Delta T$ described above. For example, when the foregoing frequency ($k \times fc$) is determined to be 38 kHz, the foregoing period $\Delta T$ is the period corresponding to the reciprocal thereof, or $1 / (38 \times 10^3)$ sec.

Moreover, the foregoing sampling interval $\Delta T$ is a period shorter than the time widths of occurrence of the pilot signal and the sub carrier.

When set thus in advance, the predictor 7 samples the sampling signal Y in high resolutions in synchronization with the sampling intervals $\Delta T$. The predictor 7 holds a plurality n of sample values in series obtained within the foregoing period T (that is, n = T / $\Delta T$), and updates the series of sample values by so-called first in first out (FIFO) processing or the like where the oldest sample value is discarded each time the latest sample value is input.

Then, the predictor 7 performs predictive operations by using a series of sample values consisting of n sample values, in synchronization with the sampling intervals $\Delta T$. The predictor 7 thus determines the predictive values <Y> approximate to the pilot signal and the sub carrier.

Incidentally, the predictor 7 may incorporate various other predictive operation methods including a correlation operation method and a learning identification method. In the correlation operation method, correlation values are obtained through correlation operations on the foregoing series of sample values, and the correlation values are adopted for the foregoing predictive values <Y>. In the learning identification method, the series of sample values described above is input to a prediction filter for learning, and the values of filter factors of the prediction filter obtained through the learning are adopted for the foregoing predictive values <Y>.

A yet concrete example of the predictive operation method will be described in conjunction with a practical example to be seen later.

The interpolation control unit 6 holds the predictive values <Y> output from the predictor 7, in synchronization with the timing of occurrence of the hold control signal CNT1, and updates and holds new predictive values <Y> each time a new hold control signal CNT1 is output.

The interpolation control unit 6 also determines a difference between the latest predictive value <Y> output from the predictor 7 at the sampling intervals $\Delta T$ and the foregoing predictive value <Y> held in advance (hereinafter, referred to as "hold predictive value <Yh2>"), and generates the difference (i.e., the amount of change) as an interpolation amount Scmp.

To be more specific, suppose that the holding unit 4 outputs the hold control signal CNT1 at points of time ta, tb, tc ..., and the predictor 7 outputs predictive values <Y> of <Ya>, <Yb>, <Yc> ... at the points ta, tb, tc ..., respectively. Hold periods starting at the respective points ta, tb, and tc (in other words, the periods of occurrence of noise indicated by the hold control signal CNT1) shall be $\tau a$, $\tau b$, and $\tau c$.

In this case, the interpolation control unit 6 holds the predictive value <Ya> as the hold predictive value <Yh2> in the hold period $\tau a$. In the hold period $\tau b$, the predictive value <Yb> is held as the hold predictive value <Yh2>. In the hold period τc, the predictive value <Yc> is held as the hold predictive value <Yh2>.

Suppose also that during the hold period τa, the predictor 7 outputs predictive values <Y> of <Ya1>, <Ya2>, <Ya3> ... at sampling intervals ΔT. The interpolation control unit 6 determines differences between the hold predictive value <Yh2> and the predictive values <Ya1>, <Ya2>, <Ya3> ..., or (<Ya> - <Ya1>), (<Ya> - <Ya2>), (<Ya> - <Ya3>) .... The differences (amounts of change) are adopted for respective interpolation amounts Scmp. In short, the interpolation control unit 6 determines the foregoing differences (<Ya> - <Ya1>), (<Ya> - <Ya2>), (<Ya> - <Ya3>) ... in synchronization with the sampling intervals ΔT which are shorter than the hold period τa, thereby determining the interpolation amounts Scmp in high temporal resolutions.

Suppose also that during the hold period τb, the predictor 7 outputs predictive values <Y> of <Yb1>, <Yb2>, <Yb3>, <Yb4> ... at sampling intervals ΔT. Then, the interpolation control unit 6 similarly determines differences between the hold predictive value <Yh2> and the predictive values <Yb1>, <Yb2>, <Yb3>, <Yb4> ..., or (<Yb> - <Yb1>), (<Yb> - <Yb2>), (<Yb> - <Yb3>), (<Yb> - <Yb4>) ..., and adopts the differences (amounts of change) for respective interpolation amounts Scmp.

Subsequently, in the same manner, the interpolation control unit 6 repeats the processing for determining the differences (amounts of change) between the hold predictive value <Yh2> held in advance and the predictive values <Y> obtained at sampling intervals ΔT, i.e., the interpolation amounts Scmp.

Furthermore, the interpolation control unit 6 decides whether or not to interpolate the hold signal Yh1 with the foregoing interpolation amounts Scmp in a hold period indicated by the hold control signal CNT1.

More specifically, the predictor 7 having the function of predicting so-called original signals through predictive operations may have difficulties in performing accurate predictive operations, for example, when the sample signal Y varies in frequency characteristics. It might thus become difficult to determine accurate predictive values <Y> approximate to the pilot signal and sub carrier mentioned above. When the predictor 7 outputs inappropriate predictive values <Y> approximate to neither the pilot signal nor the sub carrier, the values of the foregoing interpolation amounts Scmp generated in the interpolation control unit 6 are also inappropriate. The synthetic unit 5 might thus interpolate missing signal components in the hold signal Yh1 by synthesizing the hold signal Yh1 with these inappropriate interpolation amounts Scmp, with the adverse effect of additional noise on the output signal Yout. That is, the hold signal Yh1 whose noise is eliminated in the holding unit 4 might be synthesized with inappropriate interpolation amounts Scmp with the opposite effect that the interpolation processing had better not be performed.

In view of this, when inappropriate predictive values <Y> are generated, the interpolation control unit 6 stops supplying the interpolation amounts Scmp to the synthetic unit 5 or instructs the synthetic unit 5 to inhibit the synthetic processing. As a result, the hold signal Yh1 is passed intact as the output signal Yout, and output as the noiseless output signal Yout. On the other hand, when appropriate predictive values <Y> are generated, the interpolation amounts Scmp are supplied to the synthetic unit 5 for synthesis with the hold signal Yh1. As a result, the output signal Yout is output with its missing signal components, such as the pilot signal and the sub carrier, interpolated.

To perform such interpolation processing, the interpolation control unit 6 initially inputs the hold signal Yh1 and the predictive values <Y> at the sampling intervals ΔT, during the hold period indicated by the hold control signal CNT1. Upon each input, the interpolation control unit 6 compares the value (level) of the hold signal Yh1 in the hold period and the predictive value <Y>, and if the predictive value <Y> differs from the hold signal Yh1 beyond a predetermined condition, regards the predictive value <Y> as inappropriate. If the difference is smaller than the predetermined condition, the interpolation control unit 6 regards the predictive value <Y> as appropriate.

When an inappropriate predictive value <Y> is detected, the interpolation during the hold period using the foregoing interpolation amount Scmp is stopped or inhibited. When an appropriate predictive value <Y> is detected, the interpolation with the interpolation amount Scmp is performed in the hold period.

More specifically, the interpolation control unit 6 determines the absolute value $|<Y> - Yh1|$ of a difference between the predictive value <Y> and the hold signal Yh1 acquired at the same time in the hold period, and the absolute value $|Yh1|$ of the hold signal Yh1. Then, the predictive value <Y> is regarded as inappropriate if the condition given by the following expression (1) holds:

$$|<Y> - Yh1| > |Yh1| \qquad (1)$$

On the other hand, the predictive value <Y> is regarded as appropriate if the condition given by the following expression (2) holds:

$$|<Y> - Yh1| \leq |Yh1| \qquad (2)$$

For example, when the sample signal Y varies in frequency characteristic and thus a predictive value <Y> applicable to the condition of the foregoing expression (1) is generated, the predictive value <Y> corresponds to the case there it differs greatly from the hold signal Yh1. It follows that the interpolation amount Scmp generated based on the predictive value <Y> of great difference has a value inappropriate for interpolation.

Consequently, if the synthetic unit 5 synthesizes the hold signal Yh1 with the inappropriate interpolation amount Scmp during the hold period, there arises the opposite effect that the interpolation amount Scmp mixed into the output signal Yout functions adversely as noise. When the foregoing inappropriate predictive value <Y> is generated, the interpolation control unit 6 thus stops or inhibits the interpolation with the interpolation amount Scmp in the hold period.

On the other hand, when a predictive value <Y> applicable to the condition of the foregoing expression (2) is generated, the predictive value <Y> corresponds to the case where it is not so greatly different from the hold signal Yh1. It follows that the interpolation amount Scmp generated from the predictive value <Y> of small difference has a value appropriate for interpolation. For this reason, the interpolation control unit 6 instructs the synthetic unit 5 to synthesize the hold signal Yh1 with the appropriate interpolation amount Scmp in the hold period. As a result, the output signal Yout is generated with its missing signal components, such as the pilot signal and the sub carrier, interpolated.

As above, according to the noise eliminator 3 of the present embodiment, the noise of the input signal Yin is initially eliminated in the holding unit 4 appropriately. It is therefore possible to generate the output signal Yout with noise elimination effect.

Moreover, in cases where signal components not to be eliminated (such as necessary signal components including the pilot signal and the sub carrier) are eliminated in the holding unit 4 and the hold signal Yh1 is generated with its necessary signal components missing, then the predictor 7 predicts those signal components, the interpolation control unit 6 generates interpolation amounts Scmp based on the predictive values <Y>, and the synthetic unit 5 interpolates (synthesizes) the hold signal Yh1 with the interpolation amounts Scmp during the hold periods. It is therefore possible to generate an output signal Yout having necessary signal components.

When the predictor 7 fails to determine appropriate predictive values <Y> for any reason, the interpolation amounts Scmp generated from the inappropriate predictive values <Y> are prevented from being used to interpolate the hold signal Yh1. It is therefore possible to perform appropriate interpolation processing and generate the output signal Yout with the noise elimination effect.

As above, the noise contained in the input signal Yin is eliminated by the holding unit 4. Signal components removed as a result of the noise elimination are interpolated with interpolation amounts Scmp which are generated from the predictive values <Y> predicted by the predictor 7. Besides, in the interpolation processing, the interpolation using the foregoing interpolation amounts Scmp is not performed if the predictive values <Y> are inappropriate, while the interpolation is performed if the predictive values <Y> are appropriate. This allows both noise elimination and the interpolation of necessary signal components, and can avoid such problems as interpolation with inappropriate interpolation amounts.

It is therefore possible to provide a noise eliminator which can avoid such problems as the elimination of necessary signal components and can perform appropriate noise elimination.

[Example]

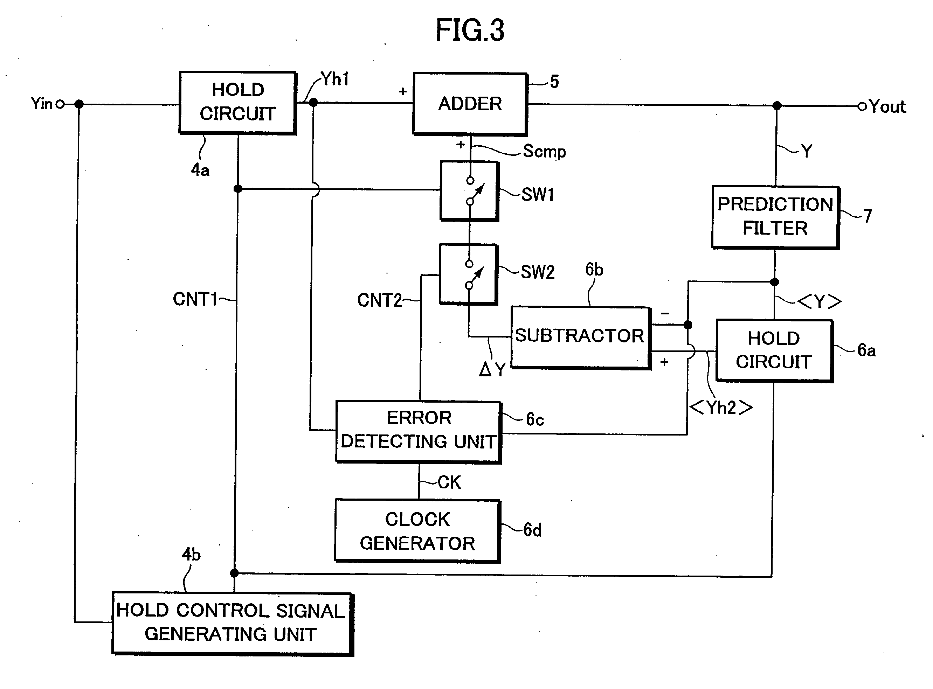

Now, an example of the noise eliminator will be described with reference to Figs. 3 to 7E.

Incidentally, the noise eliminator in this example is intended for an in-car FM receiver of super heterodyne system. The noise eliminator inputs FM detection signals generated by the tuner circuit, frequency converter, detector, and the like arranged in the in-car FM receiver as its input signal Yin.

Then, it eliminates noises superimposed on the input signal Yin, such as ignition noise, and applies appropriate interpolation processing for avoiding lack of necessary signal components such as the pilot signal and the sub carrier, thereby generating the FM detection signal Yout for output.

Initially, the configuration of this noise eliminator will be described with reference to Fig. 3.

This noise eliminator comprises a hold circuit 4a and a hold control signal generating unit 4b which correspond to the holding unit 4 shown in Fig. 2, an adder 5 which corresponds to the synthetic unit 5, and a prediction filter 7 which corresponds to the predictor 7.

The noise eliminator also comprises circuitry which corresponds to the interpolation control unit 6 shown in Fig. 2, consisting of a first switch element SW1, a second switch element SW2, a hold circuit 6a, a subtractor 6b, an error detecting unit 6c, and a clock generating unit 6d.

Here, the hold control signal generating unit 4b subjects the input signal Yin to its high-pass filter which has a pass band adjusted to the frequency band of noise to be eliminated. The hold control signal generating unit 4b then shapes the waveform of the noise passed through the high-pass filter to generate a hold control signal CNT1 of rectangular waveform which indicates the period of occurrence of noise.

Incidentally, the hold control signal CNT1 is generated as a binary signal which exhibits logical "H" in the period of occurrence of noise and logical "L" in noiseless periods.

Then, the hold control signal generating unit 4b supplies the hold control signal CNT1 to the first and second hold circuits 4a, 6a, and the first switch element SW1.

The hold circuit 4a is made of a so-called S/H circuit (sample hold circuit) which is controlled by the hold control signal CNT1. When the hold control signal CNT1 is logical "L," the hold circuit 4a passes the input signal Yin intact as the hold signal Yh1. On the other hand, when the hold control signal CNT1 is inverted from logical "L" to "H," the hold circuit 4a holds the signal component of the input signal Yin at the point of the rising edge, and maintains the level of the hold signal Yh1 to that of the hold signal component mentioned above and outputs the same during a period until the hold control signal CNT1 returns from logical "H" to "L" (holding period).

As will be detailed later, when an interpolation amount Scmp is supplied from the switch element SW1 in the hold period when the hold control signal CNT1 is logical "H," the adder 5 adds the interpolation amount Scmp to the hold signal Yh1 to generate and output the output signal Yout which is given interpolation processing. If no interpolation amount Scmp is supplied from the switch element SW1, the adder 5 passes the hold signal Yh1 as-is and outputs the same as the output signal Yout without the foregoing addition processing.

The prediction filter 7 inputs the output signal Yout as a sample signal Y to be subjected to the predictive operation. That is, the prediction filter 7 inputs the sample signal Y as a series of sample values in synchronization with the predetermined sampling intervals $\Delta T$. Each time the sample signal Y is input in synchronization with the sampling intervals $\Delta T$, the prediction filter 7 performs a predictive operation using a series of a plurality n of sample values input within a period T, or the sampling interval $\Delta T$ multiplied by an integer n (T = n × $\Delta T$), thereby generating a predictive value <Y> approximate to the input signal Yin.

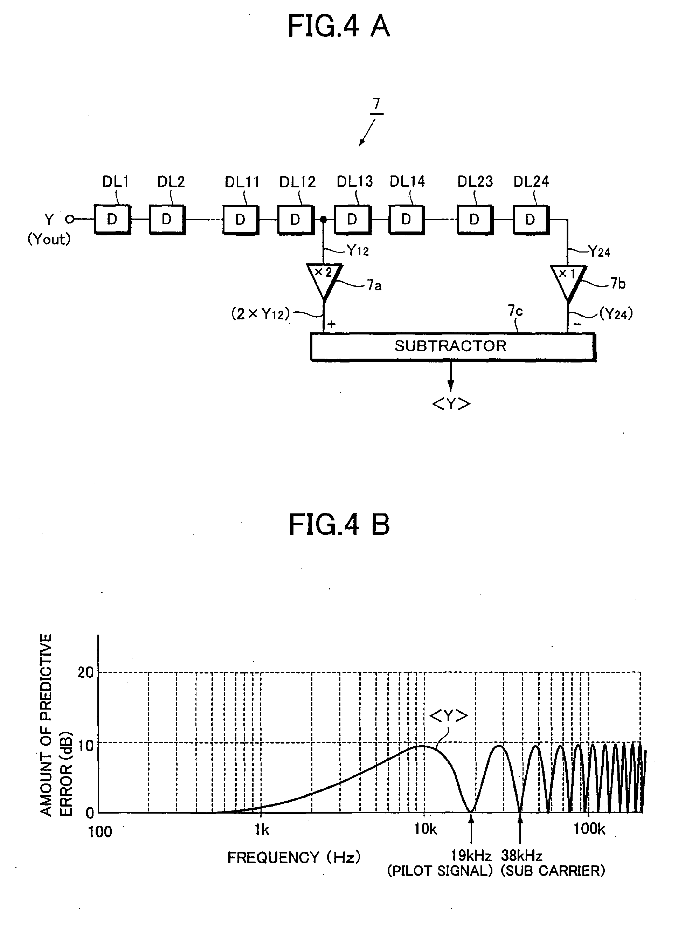

More specifically, the prediction filter 7 is made of a first-order digital filter having the configuration shown in Fig. 4A.

That is, the prediction filter 7 comprises 24 (n = 24) delay elements DL1 to DL24 connected in series, a coefficient unit 7a connected to the output point of the 12th delay element DL12, a coefficient unit 7b connected to the output point of the 24th delay element DL24, and a subtractor 7c for subtracting the output of the coefficient unit 7b from that of the coefficient unit 7a.

These delay elements DL1 to DL24 are each given a delay time D identical to the sampling interval $\Delta T$. When the sample signal Y (i.e., the output signal Yout) is input to the delay element DL1 which lies in the first stage, the sample signal Y is input as a series of sample values and transferred to the delay elements in the subsequent stages in accordance with the respective delay times D.

The sampling interval $\Delta T$ and the delay time D are set at the time corresponding to the reciprocal of the frequency 228 kHz, or $1/(228 × 10^3)$ seconds, for the sake of high-fidelity approximation of predictive values <Y> which correspond to the 19-kHz pilot signal and the 38-kHz sub carrier contained in the FM detection signal.

That is, in this practical example, a high frequency of 228 kHz is employed as the frequency (k × fc) which is the frequency fc, or the least common multiple of 19 kHz and 38 kHz, multiplied by an integer k (k is a natural number). The sampling interval $\Delta T$ and the delay time D are thus set finer to sample the sample signal Y in high temporal resolutions.

The coefficient units 7a and 7b are made of amplifiers or the like. The coefficient unit 7a multiplies a sample value Y12, which is output from the 12th delay element DL12, by two and outputs the resultant. The coefficient unit 7b multiplies a sample value Y24, which is output from the delay element DL24, by one and outputs the resultant.

The subtractor 7c subtracts the sample value (Y24) output by the coefficient unit 7b from the sample value (2 × Y12) output by the coefficient unit 7a, thereby determining the predictive value <Y> through the first-order predictive operation expressed by the following equation (3):

$$<Y> = (2 × Y12) - (Y24) \qquad (3)$$

The prediction filter 7 of such configuration has the following characteristics, and particularly has the function of generating predictive values <Y> capable of reproduction of the 19-kHz pilot signal and 38-kHz sub carrier contained in the FM detection signal.

That is, the total delay time T1 of the 12 delay elements DL1 to DL12 and the total delay time T2 of the 12 delay elements DL13 to DL24 are set to satisfy the relationship of T1 = T2 = T/2.

Consequently, when the sample signal Y contains the signal component of the pilot signal or sub carrier which arises at cycles proportional to the delay time T1 (or T2) in a so-called standing fashion, a series of sample values of the signal component lies both in the 12 delay elements DL1 to DL12 at the preceding stages and in the 12 delay elements DL13 to DL24 at the subsequent stages.

The series of sample values of the signal component lying within the delay elements DL1 to DL12 and the series of sample values lying within the delay elements DL13 to DL24 have a phase difference as much as the delay time T1 (or T2). Thus, the sample value Y12 to be output from the delay element DL12 and the sample value Y24 to be output from the delay element DL24 are successively output in synchronization with the delay time D, as sample values correlative with each other.

For example, when the 11th delay element DL11 contains a sample value corresponding to the standing pilot signal or sub carrier, the delay element DL23 lying ahead of the delay element DL11 by the phase difference of delay time T1 (or T2) also contains a sample value corresponding to the pilot signal or sub carrier. Then, in synchronization with the sampling intervals $\Delta T$, the sample values in those delay elements DL11, DL23 are transferred to the delay elements DL12, DL24 and output as the sample values Y12, Y24, respectively. The sample values Y12 and Y24 are thus output as correlative sample values having the characteristics of the pilot signal or sub carrier.

Then, the coefficient unit 7a multiplies the sample value Y12, one of these correlative values, by two and the coefficient unit 7b multiplies the other sample value Y24 by one. The subtraction therebetween in the subtractor 7c thus achieves a predictive operation by which a sample value $\{(2 \times Y12) - (Y24)\}$ approximate to the signal component of the pilot signal or sub carrier is determined as the predictive value <Y>.

In particular, when the predictive operation is performed by this prediction filter 7, the sample value $\{(2 \times Y12) - (Y24)\}$ obtained through the foregoing subtraction processing generally coincides with the sample value Y12 output from the delay element DL12 or the sample value Y24 output from the delay element DL24, provided that the sample values Y12 and Y24 are highly correlative with each other. It is therefore possible to determine the predictive value <Y> approximate to the signal component of the pilot signal or sub carrier without attenuation.

In contrast, when the sample values Y12 and Y24 output from the delay elements DL12 and DL24 are of nonperiodic noise component or signal component, these sample values Y12 and Y24 are not correlative with each other. Here, the sample value $\{(2 \times Y12) - (Y24)\}$ output from the subtractor 7c has a value smaller than the sample value $\{(2 \times Y12) - (Y24)\}$ which is obtained from the foregoing correlative sample values Y12 and Y24.

Consequently, this prediction filter 7 makes it possible to determine predictive values <Y> approximate to the periodic standing pilot signal or sub carrier without attenuation, and to attenuate predictive values <Y> pertaining to nonperiodic noise etc. The predictive values <Y> approximate to the pilot signal or sub carrier, which are originally intended, can thus be determined with emphasis.

Fig. 4B shows the input and output characteristics of the prediction filter 7 described so far. More specifically, Fig. 4B is a dB representation of ratio (ratio of predictive error) between sample signals Y of various frequencies and predictive values <Y> obtained at respective frequencies when the sample signals Y are input to the prediction filter 7. In the chart, the ratio of predictive error (<Y> / Y) approaches 0 (dB) when the predictive value <Y> well approximates the sample signal Y. On the other hand, the ratio of predictive error (<Y> / Y) shows a value larger than 0 (dB) when the predictive value <Y> fails to approximate the sample signal Y.

As can be seen from the chart, the prediction filter 7 shows smaller amounts of predictive error for sample signals Y in a frequency band lower than frequencies near 1 kHz. This means that the predictive values <Y> well approximate the sample signals Y can be obtained.

The amount of predictive error also falls for the signal components having frequencies equivalent to integer multiples of 19 kHz (19 kHz, 38 kHz, ...). The prediction values <Y> approximate to the pilot signal or sub carrier can thus be determined without attenuation.

On the other hand, at frequencies higher than 19 kHz, the amount of predictive error increases for sample signals Y which have frequencies off the integermultiples of 19 kHz. Then, the predictive values <Y> are obtained with attenuation when the sample signals Y input are of signal components other than the pilot signal and sub carrier, noise, and the like. In other words, predictive values are substantially not determined of signal components other than the pilot signal and sub carrier, noise, etc.

This noise eliminator utilizes the characteristics of this prediction filter 7 to exercise appropriate noise elimination and interpolation processing. The details will be given later.

Returning to Fig. 3, the hold circuit 6a holds the predictive value <Y> in synchronization with the inversion of the hold control signal CNT1 from logical "L" to "H," or the so-called rising edge thereof. During the hold period when the hold control signal CNT1 is logical "H," the hold circuit 6a keeps outputting the predictive value <Y> it holds as the hold predictive value <Yh2>. On the other hand, when the hold control signal CNT1 is logical "L," i.e., not in the hold period, the hold circuit 6a passes the predictive value <Y> without a hold, and outputs it as the hold predictive value <Yh2> as-is.

The subtractor 6b determines a difference $\Delta Y$ between the hold predictive value <Yh2> described above and the predictive value <Y> output from the prediction filter 7 in synchronization with the sampling intervals $\Delta T$ (i.e., <Yh2> - <Y>), and outputs it to the switch element SW2.

Consequently, when the hold control signal CNT1 is logical "L" (not in the hold period), the subtractor 6b subtracts the predictive value <Y> directly supplied by the predictor 7 from the predictive value <Y> supplied as the hold predictive value <Yh2> through the hold circuit 6a, and thereby outputs the difference $\Delta Y$ which is approximately zero in value.

In contrast, during the hold period, the subtractor 6b determines a difference $\Delta Y$ between the hold predictive value <Yh2> held in the hold circuit 6a and the predictive value <Y> supplied from the prediction filter 7 in synchronization with the sampling intervals $\Delta T$, and outputs this difference $\Delta Y$ as the amount of change of the predictive value <Y> with respect to the hold predictive value <Yh2>.

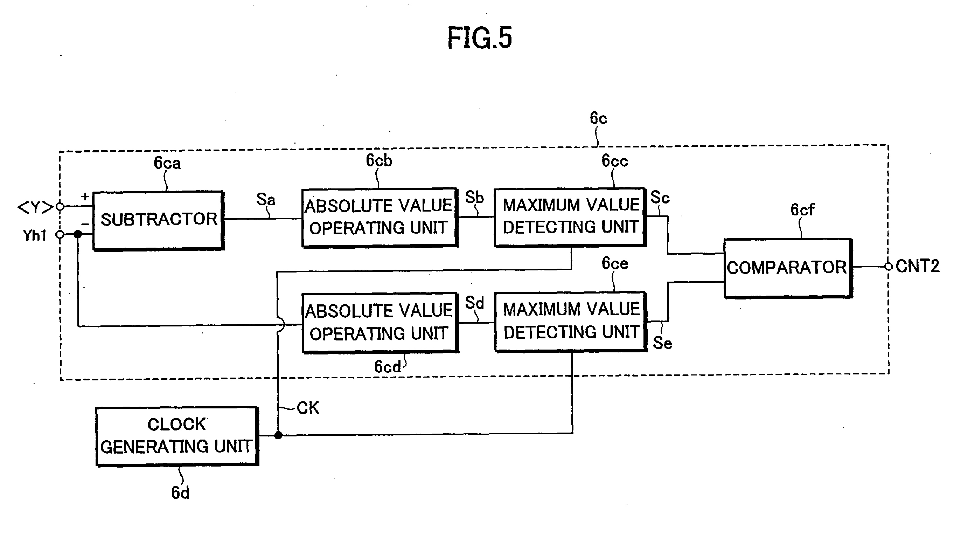

The error detecting unit 6c has the configuration shown in Fig. 5. The error detecting unit 6c applies signal processing to the predictive value <Y> and the hold signal Yh1 to generate a control signal CNT2 for controlling on/off the switch element SW2. Incidentally, the error detecting unit 6c performs the above-mentioned signal processing in synchronization with a clock signal CK (given a time cycle longer than the foregoing sample interval ΔT) which is supplied from the clock generating unit 6d.

More specifically, the error detecting unit 6c comprises a subtractor 6ca, absolute value operating units 6cb and 6cd, maximum value detecting units 6cc and 6ce, and a comparator 6cf.

Here, the subtractor 6ca subtracts the hold signal Yh1 from the predictive value <Y>, and outputs the subtraction result Sa to the absolute value operating unit 6cb.

The absolute value operating unit 6cb determines the absolute value of the subtraction result Sa, or |<Y> - Yh1|, and outputs it to the maximum value detecting unit 6cc as an operation result Sb.

The maximum value detecting unit 6cc detects a maximum value of operation results Sb occurring within each cycle of the clock signal CK, and outputs the obtained maximum value Sc in synchronization with each cycle.

The absolute value operating unit 6cd determines the absolute value of the hold signal Yh1, or |Yh1|, and outputs it to the maximum value detecting unit 6ce as an operation result Sd.

Like the maximum value detecting unit 6cc, the maximum value detecting unit 6ce detects a maximum value of operation results Sd occurring within each cycle of the clock signal CK, and outputs the obtained maximum value Se in synchronization with each cycle.

The comparator 6cf compares the maximum values Sc and Se. If the maximum value Sc is larger than the maximum value Se (i.e., if Sc > Se) , the control signal CNT2 of logical "L" is output. That is, when the maximum values Sc and Se have the foregoing relationship Sc > Se, the comparator 6cf outputs the control signal CNT2 of logical "L," considering that the predictive value <Y> differs from the hold signal Yh1 greatly and is thus inappropriate, approximating neither of the pilot signal and the sub carrier signal.

On the other hand, when the maximum value Sc is smaller than or equal to the maximum value Se (i. e., Sc ≤ Se), the comparator 6cf outputs the control signal CNT2 of logical "H," considering that the predictive value <Y> does not differ from the hold signal Yh1 greatly and is thus appropriate, approximating the pilot signal or the sub carrier signal.

Then, the comparator 6cf supplies the control signal CNT2 of logical "L" to the switch element SW2, thereby turning off (disconnecting) the subtractor 6b and the switch element SW1. This inhibits the difference ΔY, which is determined as an interpolation amount, from being supplied to the switch element SW1.

Moreover, the comparator 6cf supplies the control signal CNT2 of logical "H" shown in Fig. 3 to the switch element SW2, thereby turning on (connecting) the subtractor 6b and the switch element SW1 so that the difference ΔY, which is determined as an interpolation amount, is then supplied to the switch element SW1.

The switch element SW1 turns on/off in accordance with the hold control signal CNT1.

More specifically, the switch control element SW1 turns on in the period when the hold control signal CNT1 is logical "H" (hold period), so that the difference ΔY transferred through the switch element SW2 is supplied to the adder 5 as the interpolation amount Scmp.

In the period when the hold control signal CNT1 is logical "L" (in periods other than the hold period), the switch element SW1 stops or inhibits supplying the difference ΔY to the adder 5.

That is, the switch elements SW1 and SW2 supply the difference ΔY to the adder 5 as the interpolation amount Scmp when under the following first condition, and stops or inhibits supplying the difference ΔY to the adder 5 as the interpolation amount Scmp when under the following second condition.

[First condition]

The hold control signal CNT1 and the control signal CNT2 both are logical "H."

[Second condition]

The control signal CNT2 is logical "L," irrespective of the hold control signal CNT1.

Since the switch elements SW1, SW2 are controlled on/off according to these first and second conditions, the first condition is satisfied when the predictive value <Y> generated is appropriate. Thus, the adder 5 adds the appropriate interpolation amount Scmp to the hold signal Yh1. Consequently, when the first condition holds, the appropriate interpolation amount Scmp is added to the hold signal component during the hold period of the hold signal Yh1, whereby the signal component missing in the hold processing of the hold circuit 4a is interpolated appropriately.

Moreover, the second condition is satisfied when the predictive value <Y> generated is inappropriate. Thus, the adder 5 will not add the inappropriate interpolation amount Scmp to the hold signal Yh1 even in the hold period.

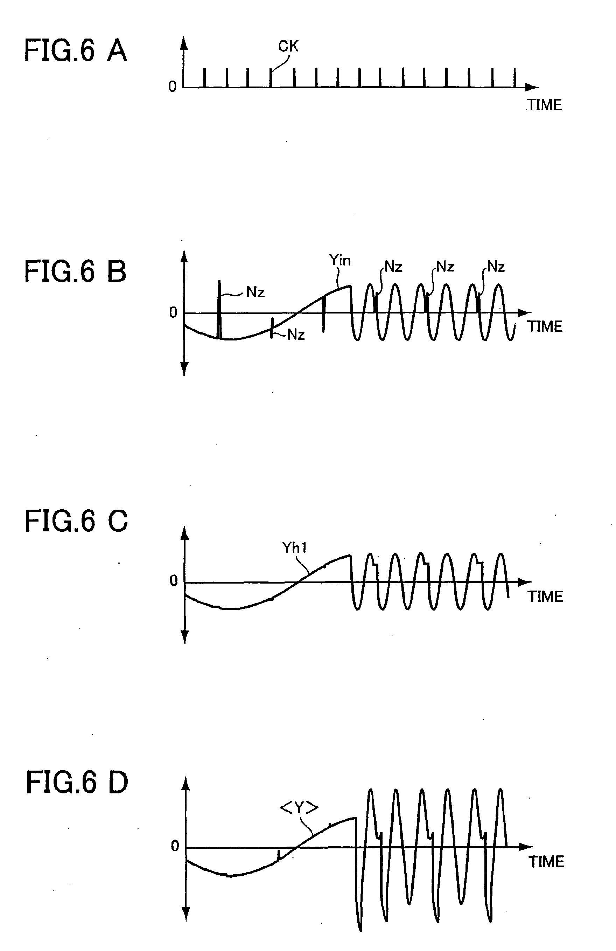

Now, the operation of the noise eliminator having such a configuration will be described with reference to Figs. 6A to 7E. Incidentally, all the waveforms shown in Figs. 6A to 7E are adjusted to an identical time axis.

Fig. 6A shows a wave train of the clock CK output from the clock generating unit 6d, Fig. 6B a wave train of the input signal Yin on which noise Nz is superimposed, Fig. 6C a wave train of the hold signal Yh1, and Fig. 6D a wave train of the predictive value <Y> generated by the prediction filter 7.

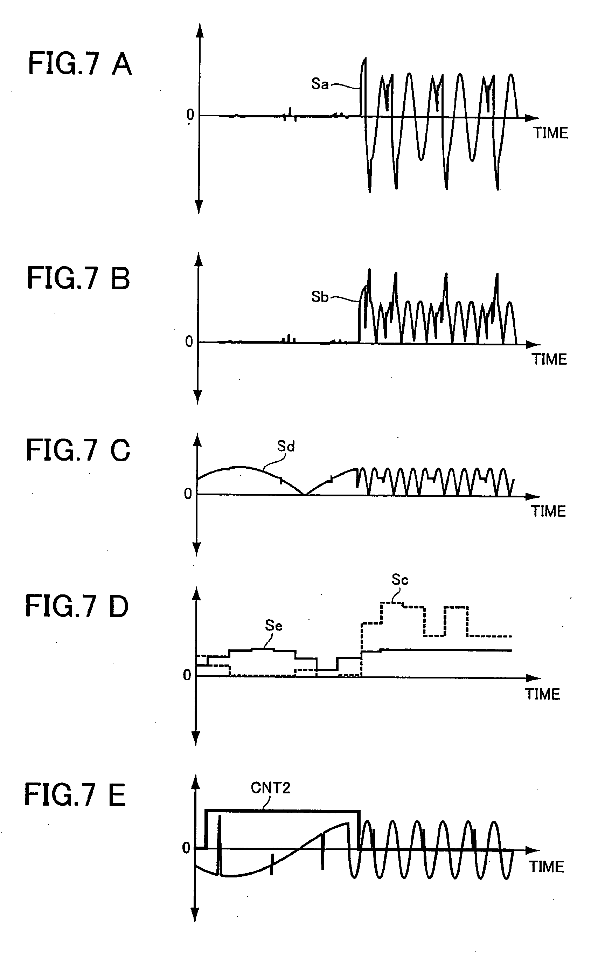

Fig. 7A shows a wave train of the subtraction result Sa output from the subtractor 6ca shown in Fig. 5, Fig. 7B a wave train of the operation result Sb from the absolute value operating unit 6cb, Fig. 7C a wave train of the operation result Sd from the absolute value operating unit 6cd, and Fig. 7D wave trains of the maximum values Sc and Se output from the maximum value detecting units 6cc and 6ce. Moreover, Fig. 7E shows the control signal CNT2 output from the comparator 6cf, in association with the input signal Yin.

Before going into details of the operation, an overview will initially be given of the operation from the input of the input signal Yin to the generation of the output signal Yout.

When the input signal Yin as illustrated in Fig. 6B is input, the hold control signal generating unit 4b detects noise Nz, and outputs the hold control signal CNT1 which indicates the hold periods corresponding to the periods of occurrence of the noise Nz.

The hold circuit 4a performs the hold processing in accordance with the hold control signal CNT1, thereby outputting the hold signal Yh1 which is given noise elimination as shown in Fig. 6C.

Then, in the hold periods, interpolation amounts Scmp are supplied to the adder 5 from the switch elements SW1 and SW2 according to the first condition described above. The adder 5 adds the supplied interpolation amounts Scmp to the hold signal Yh1, thereby generating and outputting the output signal Yout in which necessary signal components such as the pilot signal and sub carrier are interpolated.

The prediction filter 7 performs predictive operations to generate the predictive value <Y> approximate to the necessary signal components such as the pilot signal and sub carrier. From the predictive value <Y>, the hold circuit 6a and the subtractor 6b generate differences ∆Y for interpolating the necessary signal components such as the pilot signal and sub carrier. Under the on/off control by the foregoing switch elements SW1 and SW2, the differences ∆Y are supplied to the adder 5 as the interpolation amounts Scmp for appropriate interpolation.

As above, the prediction filter 7, the hold circuit 6a, the subtractor 6b, and the switch elements SW1 and SW2 constitute a so-called feedback path for the adder 5, whereby the pilot signal, the sub carrier, and other signal components missing in the hold signal Yh1 are interpolated with the interpolation amounts Scmp. As a result, the output signal Yout is generated with appropriate elimination of noise and appropriate interpolation of necessary signal components.

Next, the operation of the noise eliminator will be described in detail.

As described above, when the input signal Yin containing the noise Nz illustrated in Fig. 6B is supplied, the hold circuit 4a outputs the hold signal Yh1 shown in Fig. 6C and the adder 5 outputs the output signal Yout given interpolation processing.

Then, the interpolation filter 7 inputs the sample signal Y and performs predictive operations, outputting the predictive value <Y> as shown in Fig. 6D.

Meanwhile, the error detecting unit 6c configured as shown in Fig. 5 performs the processing for generating the control signal CNT2 based on the hold signal Yh1 and the predictive value <Y>, along with the processing through the feedback path described above.

More specifically, the subtractor 6ca shown in Fig. 5 inputs the hold signal Yh1 and the predictive value <Y>, and subtract the hold signal Yh1 from the predictive value <Y> to output the subtraction result Sa shown in Fig. 7A.

The absolute value operating unit 6cb determines the absolute value of the subtraction result Sa, and outputs the operation result Sb shown in Fig. 7B.

The absolute value operating unit 6cd also determines the absolute value of the hold signal Yh1 to output the operation result Sd shown in Fig. 7C.

Then, the maximum value detecting unit 6cc detects the maximum value Sc of the operation result Sb within each cycle of the clock CK, and the maximum value detecting units 6ce detects the maximum value Se of the operation result Sd within each cycle of the clock CK. As a result, the maximum values Sc and Se having stepwise waveforms shown in Fig. 7D are output.

Here, the waveform of the predictive value <Y> shown in Fig. 6D depends on the characteristic of the prediction filter shown in Fig. 4B. Specifically, as shown in Fig. 4B, the prediction filter 7 has the characteristic that the amount of predictive error drops during predictive operations on such signal components as those of the sample signal Y lying in a frequency band lower than approximately 1 kHz and those having frequencies of integer multiples of 19 kHz. Thus, the predictive values <Y> for such signal components as those in the low frequency band described above and at frequencies of integer multiples of 19 kHz are generated in larger values.

Consequently, the predictive values <Y> of both the 19-kHz pilot signal and the 38-kHz sub carrier are generated appropriately.

Nevertheless, as shown in Fig. 4B, the amount of predictive error also drops at frequencies above those of the pilot signal and sub carrier if the frequencies fall on integer multiples of 19 kHz. Thus, at these frequencies, predictive values <Y> of signal components, noise components, and the like can also be generated in larger values. In particular, when those predictive values <Y> exceed the predictive values <Y> of the pilot signal and sub carrier, there might occur the problem that the adder 5 interpolates the hold signal Yh1 with inappropriate interpolation amounts Scmp.

Then, the error detecting unit 6c shown in Fig. 5 detects the cases where the predictive values <Y> of the signal components, noise components, or the like having frequencies falling on integer multiples of 19 kHz described above have inappropriate (greatly different) values, and performs the processing for stopping or inhibiting the inappropriate interpolation.

Initially, the subtractor 6ca in Fig. 5 determines difference between the predictive value <Y> and the hold signal Yh1 to obtain the subtraction value Sa which shows the amounts of difference of the predictive value <Y> from the hold signal Yh1 as shown in Fig. 7A. Then, the absolute value operating unit 6cb determines the absolute values of the subtraction value Sa to standardize the amounts of difference into positive values.

Then, the maximum value detecting unit 6cc detects the maximum value of the operation results Sb occurring within a cycle of the clock signal CK to output the maximum value Sc which shows the largest amount of difference.

Meanwhile, in parallel with the processing by the subtractor 6ca, the absolute value operating unit 6cb, and the maximum value detecting unit 6cc described above, the absolute value operating unit 6cd determines the operation result Sd which indicates the absolute value |Yh1| of the hold signal Yh1. Moreover, the maximum value detecting unit 6ce detects the maximum value of the operation result Sd occurring within the cycle of the clock signal CK to output the maximum value Se which indicates the largest value of the hold signal Yh1.

Then, the comparator 6cf compares the maximum value Sc indicating the largest amount of difference mentioned above and the maximum value Se indicating the largest value of the hold signal Yh1. If the maximum value Sc is larger than the maximum value Se, the predictive value <Y> is greatly different from the hold signal Yh1 and thus is inappropriate. Then, the control signal CNT2 of logical "L" as shown in Fig. 7E is output. If the comparison of the maximum values Se and Sc shows that the maximum value Se is smaller than or equal to the maximum value Sc, the predictive value <Y> is not so greatly different from the hold signal Yh1 and thus is appropriate. Then, the control signal CNT2 of logical "H" is output.

By means of the control signal CNT2 of logical "L," the comparator 6cf turns off (disconnects) the switch element SW2 to stop or inhibit the processing corresponding to the foregoing second condition, i.e., the interpolation processing. The provision of this interpolation stop or inhibition avoids the problem that the adder 5 interpolates the hold signal Yh1 with inappropriate interpolation amounts Scmp to generate an output signal Yout which contains even higher noise.

By means of the control signal CNT2 of logical "H," the comparator 6cf turns on (connects) the switch element SW2 to make the adder 5 perform the processing corresponding to the foregoing first condition, or to be more specific, make the adder 5 perform the interpolation processing in the hold period when the switch element SW1 is turned on by the hold control signal CNT1. That is, this interpolation processing can be performed to generate the output signal Yout in which the pilot signal and sub carrier missing in the hold signal Yh1 are reproduced.

Consequently, according to the noise eliminator of this example, the noise elimination processing in the hold circuit 4a causes missing signal components in the hold signal Yh1. At the time of interpolation thereof, the error detecting unit 6c decides whether predictive values <Y> generated by the prediction filter 7 are appropriate or not, and only if the values are appropriate, supplies interpolation amounts Scmp to the adder 5 for interpolation. This provides the excellent effect that both appropriate noise elimination and appropriate interpolation can be achieved at the same time.

As has been described, according to the noise eliminators of the present embodiment and the example, the predictor 7 and the prediction filter 7 can generate interpolation amounts Scmp for use in interpolation. The interpolation processing can be stopped or inhibited, however, in cases where these predictor 7 and prediction filter 7 fail to generate appropriate interpolation amounts, while the interpolation processing is performed when appropriate predictive values are generated. It is therefore possible to achieve both the appropriate noise elimination and the appropriate interpolation at the same time.

Incidentally, in the foregoing practical example, the error detecting unit 6c shown in Fig. 5 detects whether predictive values <Y> are inappropriate or not in such a way that the maximum value detecting units 6cc and 6ce determine respective maximum values Sc and Se of the operation results Sb and Sd which occur within a predetermined period set by the clock signal CK, and the comparator 6cf compares the maximum values Sc and Se. Nevertheless, the foregoing maximum values Sc and Se need not necessarily be determined. That is, the maximum value detecting units 6cc and 6ce may be omitted. In this case, the comparator 6cf compares the operation results Sb and Sd, and if Sb >Sd, generates the control signal CNT2 of logical "L," regarding the predictive value <Y> as inappropriate. If Sb ≤ Sd, the comparator 6cf generates the control signal CNT2 of logical "H," regarding the predictive value <Y> as appropriate.

The foregoing embodiment and example have dealt chiefly with noise eliminators for eliminating such noises as automotive ignition noise contained in FM detection signals generated by an FM radio receiver. Nevertheless, the embodiment and the example may also be used as noise eliminators which effectively eliminate noises other than the automotive ignition noise, and ones which effectively eliminate various noises from signals processed by various types of communication devices and other electronic devices aside from FM radio receivers.

**Claims**

**1.** A noise eliminator (3) for eliminating noise contained in an input signal, comprising:

holding means (4) for detecting a period of occurrence of noise contained in said input signal, passing said input signal for output during a period when no noise occurs, and putting said input signal into a hold state for output during the period of occurrence of noise;

synthetic means (5) for synthesizing a hold signal component of the signal output from said holding means with an interpolation amount (Scmp), said hold signal component being output in said hold state;

predictive means (7) for performing a predictive operation on output signals of said synthetic means to calculate predictive values approximate to said input signal; and

interpolation control means (6) for determining an amount of change of said predictive values as said interpolation amount, and stopping said synthetic means from performing the synthesis of said interpolation amount when said predictive values are inappropriate with respect to said hold signal component output in said hold state, and making said synthetic means perform the synthesis of said interpolation amount when said predictive values are appropriate.

2. The noise eliminator according to claim 1, wherein said interpolation control means determines, as the amount of change, a difference between said predictive value generated at the starting point of the period of occurrence of noise and each individual predictive value generated within the period of occurrence of noise.

3. The noise eliminator according to one of the preceding claims in particular according to claim 1, wherein said interpolation control means determines an absolute value of said difference between said each predictive value determined within the period of occurrence of noise and said hold signal component output in said hold state and an absolute value of said hold signal component, and regards said predictive value as inappropriate with respect to said hold signal component when the absolute value of said difference is greatly different from the absolute value of said hold signal component.

4. The noise eliminator according to one of the preceding claims in particular according to claim 1, wherein said interpolation control means determines an absolute value of said difference between said each predictive value determined within the period of occurrence of noise and said hold signal component output in said hold state and an absolute value of said hold signal component, and regards said predictive value as appropriate when the absolute value of said difference is little different from the absolute value of said hold signal component.

5. The noise eliminator according to one of the preceding claims in particular according to claim 3, wherein said interpolation control means further determines a maximum value of the absolute values of said differences within a predetermined period and a maximum value of the absolute values of said hold signal component within said predetermined period as a first maximum value and a second maximum value, respectively, and regards said predictive values as inappropriate with respect to said hold signal component when said first maximum value is larger than said second maximum value.

6. The noise eliminator according to one of the preceding claims in particular according to claim 4, wherein said interpolation control means further determines a maximum value of the absolute values of said differences within a predetermined period and a maximum value of the absolute values of said hold signal component within said predetermined period as a first maximum value and a second maximum value, respectively, and regards said predictive values as appropriate when said first maximum value is smaller than or equal to said second maximum value.

7. The noise eliminator according to one of the preceding claims in particular according to claim 1, wherein said input signal is an FM detection signal.

8. The noise eliminator according to one of the preceding claims in particular according to claim 7, wherein said predictive means performs a predictive operation for approximating one of a pilot signal and a sub carrier contained in said FM detection signal.

9. The noise eliminator according to one of the preceding claims in particular according to claim 8, wherein said predictive means determines a difference between two of said output signals to calculate said predictive value, said two output signals having a phase difference corresponding to the frequency of saidpilot signal or said sub carrier.

10. A noise elimination method for eliminating noise contained in an input signal, comprising:

a holding step of detecting a period of occurrence of noise contained in said input signal, passing said input signal for output during a period when no noise occurs, and putting said input signal into a hold state for output during the period of occurrence of noise;

a synthetic step of synthesizing a hold signal component of the signal output in the holding step with an interpolation amount, said hold signal component being output in said hold state;

a predictive step of performing a predictive operation on output signals generated in the synthetic step to calculate predictive values approximate to said input signal; and

an interpolation control step of determining an amount of change of said predictive values as said interpolation amount, and stopping the synthesis of said interpolation amount in the synthetic step when said predictive values are inappropriate with respect to said hold signal component output in said hold state, and enabling the synthesis of said interpolation amount in the synthetic step when said predictive values are appropriate.

# FIG.1 A

PRIOR ART

1

Yin o ——●—— | HOLD CIRCUIT | ——o Yout

CNT

| HOLD CONTROL SIGNAL GENERATING UNIT | 2

# FIG.1 B

PRIOR ART

Nz

Yin

Nz

0 ——————————— TIME

Nz

Nz

CNT

0 ——————————— TIME

Yout

0 ——————————— TIME

## FIG.2

FIG.3

EP 1 427 111 A2

# FIG.4 A

# FIG.4 B

# FIG.5

FIG.6 A

FIG.6 B

FIG.6 C

FIG.6 D

FIG.7 A

FIG.7 B

FIG.7 C

FIG.7 D

FIG.7 E